# FASCICULE DE BREVET EUROPEEN

(11) **EP 1 122 141 B1**
(45) Date de publication et mention de la délivrance du brevet: **30.05.2012**
(21) Numéro de dépôt: 01400162.2
(22) Date de dépôt: 19.01.2001
(51) Int. Cl.: B60T 13/66

(54) **Procédé et dispositif de distribution de pression et valves pour leur mise en oeuvre**
Verfahren und Vorrichtung zur Druckregelung sowie Ventile zur Durchführung des Verfahrens
Method and device for pressure regulation and valves for implementing same

(30) Priorité: 07.02.2000 FR 0001478
(43) Date de publication de la demande: 08.08.2001
(73) Titulaire: Faiveley Transport Amiens, 80046 Amiens (FR)
(72) Inventeur: Legall, Gilbert, 80000 Amiens (FR); Brassart, Pascale, 80800 Lamotte-Warfusee (FR); Brule, Manuel, 80800 Marceclave (FR); Boisseau, Gilles, 80710 Quevauvillers (FR)
(74) Mandataire: Hirsch & Associés

(56) Documents cités:
- FR-A- 2 362 033
- FR-A- 2 774 343

## Description

La présente invention concerne un procédé de distribution de pression dans lequel au moins un organe d'actionnement tel qu'un cylindre de frein est susceptible d'être alimenté, soit par un premier distributeur tel qu'une valve électrique de télécommande de pression de freinage, soit par un deuxième distributeur tel qu'un distributeur pneumatique de freinage ferroviaire relayé ou non qui doit rester sécuritaire. Elle s'applique également à un dispositif de distribution de pression et un dispositif de freinage d'un véhicule ferroviaire ainsi qu'à des valves pour la mise en oeuvre de ce procédé et de ces dispositifs.

L'alimentation d'organes d'actionnement à fluide sous pression à partir de plusieurs sources, est réalisée couramment dans de nombreuses applications telles que la télécommande pneumatique en utilisation navale et l'alimentation des cylindres de freins. Une telle alimentation multiple est relativement simple lorsqu'elle est réalisée par voie pneumatique car la commutation d'une alimentation à l'autre peut sans difficulté s'effectuer avec de légères fuites d'air comprimé, qui, à la différence des fuites hydrauliques, ne provoquent pas de pollution et sont aisément compensées.

Les valves connues pour des alimentations pneumatiques doubles ou multiples (en associant la sortie d'une telle valve à une entrée d'une valve du même type), qui sont généralement connues sous la dénomination de "double-valves d'arrêt", trouvent cependant une limite dans leur application lorsqu'il s'agit par exemple d'assurer l'alimentation sûre d'un circuit de freinage. Pour des applications ferroviaires contrôlées par l'informatique telles que les trains à grande vitesse et surtout les trains longs, les organes de freinage sont susceptibles d'être alimentés en air comprimé pour le freinage soit par un circuit télécommandé contrôlé par informatique et/ou par radio, soit par le circuit classique conforme aux Réglementations de l'Union Internationale des Chemins de Fer (UIC) et l'expérience a montré qu'en cas de variations lentes des pressions de freinage, en particulier, les double-valves connues d'alimentation et d'échappement peuvent être soumises à des défaillances et se trouver dans l'incapacité d'assurer la transmission à l'organe de freinage de la plus forte des pressions de freinage du circuit d'alimentation lorsque ces pressions de freinage "de secours" devenaient supérieures aux pressions de freinage contrôlées par un circuit informatique.

Le document FR-A-2 362 033 divulgue un procédé de télécommande simultanée des distributeurs ou valves de freinage d'un train de véhicule, dans lequel les différents véhicules du train sont munis chacun d'un distributeur de pression de freinage actionné et commandé par les variations de pression d'une conduite générale de freinage.

La présente invention vise notamment à assurer la transmission sûre des pressions de freinage délivrées par un circuit de sécurité lorsque les pressions du circuit de sécurité sont supérieures à celles d'un circuit de service.

A cet effet, l'invention propose un procédé de distribution de pression vers au moins un organe d'actionnement à l'aide d'un premier distributeur de pression et d'un deuxième distributeur de pression avec la délivrance d'une première pression à l'organe d'actionnement ou la mise à un premier circuit d'échappement de l'organe d'actionnement par le premier distributeur et la délivrance d'une deuxième pression à l'organe d'actionnement ou la mise à un deuxième circuit d'échappement de l'organe d'actionnement par le deuxième distributeur, le procédé comprenant une étape de blocage de la mise au premier circuit d'échappement de l'organe d'actionnement par le premier distributeur lorsque la deuxième pression est supérieure à la pression dans l'organe d'actionnement. Le blocage de la mise au premier circuit d'échappement peut être réalisé par la fermeture du premier échappement. Le blocage de la mise au premier circuit d'échappement peut aussi être réalisé par isolation de l'organe d'actionnement du premier distributeur. De préférence, le procédé comprend une étape d'isolation de l'organe d'actionnement du deuxième distributeur lorsque la première pression est supérieure à la deuxième pression. L'organe d'actionnement peut avantageusement actionner un frein de véhicule ferroviaire.

Selon un autre aspect, l'invention propose un dispositif de distribution de pression vers au moins un organe d'actionnement, comprenant un premier distributeur de pression comprenant une chambre d'échappement, ledit premier distributeur de pression étant susceptible d'être alimenté par une source de pression et de délivrer une première pression à l'organe d'actionnement ou de relier l'organe d'actionnement à un premier circuit d'échappement, un deuxième distributeur de pression susceptible d'être alimenté par une source de pression et de délivrer une deuxième pression à l'organe d'actionnement ou de relier l'organe d'actionnement à un deuxième circuit d'échappement caracterisé en ce qu'il comprend en outre des moyens de blocage pour bloquer la liaison entre l'organe d'actionnement et le premier circuit d'échappement lorsque la deuxième pression est supérieure à la pression dans l'organe d'actionnement.

Selon un mode de réalisation préféré, le dispositif comprend des moyens d'isolement isolant l'organe d'actionnement du deuxième distributeur lorsque la première pression est supérieure à la deuxième pression. Ces moyens d'isolement peuvent comprendre une valve d'admission comportant une première chambre reliée au premier distributeur, une deuxième chambre reliée à l'organe d'actionnement, ladite deuxième chambre comprenant une ouverture par le biais de laquelle ladite deuxième chambre est en liaison avec le deuxième distributeur et un clapet mobile pour sélectivement obturer ladite ouverture, est disposé coulissant dans un passage reliant la première chambre et la deuxième chambre, la pression dans la première chambre agissant sur le clapet dans le sens de l'obturation de ladite ouverture. La valve d'admission peut en outre comprendre un siège de clapet coopérant avec le clapet et entourant l'ouverture, la section du siège de clapet étant supérieure à la section du passage. En variante, les moyens d'isolement peuvent comprennent une valve d'admission comportant une première chambre reliée au premier distributeur, une deuxième chambre reliée au deuxième distributeur, ladite deuxième chambre comprenant une ouverture par le biais de laquelle ladite deuxième chambre est en liaison avec l'organe d'actionnement et ladite première chambre étant séparée de la deuxième chambre par une membrane flexible portant un clapet d'obturation pour obturer ladite ouverture lorsque la pression de la première chambre est supérieure à la pression de la deuxième chambre. Pour les deux variantes de valve d'admission, la première chambre peut avantageusement être reliée au premier distributeur en amont de moyens d'étranglement disposés entre le premier distributeur et l'organe d'actionnement.

Selon un autre mode de réalisation préféré, les moyens de blocage ferment le premier circuit d'échappement. Les moyens de blocage peuvent alors avantageusement déterminer la pression dans l'organe d'actionnement au niveau de la chambre d'échappement du premier distributeur de pression. Dans ce cas, les moyens de blocage peuvent comprendre une valve de blocage comportant une première chambre reliée au deuxième distributeur, une deuxième chambre reliée à la chambre d'échappement du premier distributeur, ladite deuxième chambre comprenant une ouverture par le biais de laquelle ladite deuxième chambre est en liaison avec un échappement et ladite première chambre étant séparée de la deuxième chambre par une membrane flexible portant un clapet d'obturation pour obturer ladite ouverture lorsque la pression de la première chambre est supérieure à la pression de la deuxième chambre.

Selon encore un autre mode de réalisation préféré, les moyens de blocage isolent l'organe d'actionnement du premier distributeur. Les moyens de blocage peuvent alors avantageusement une valve de blocage comportant une première chambre reliée au deuxième distributeur, une deuxième chambre reliée au premier distributeur, ladite deuxième chambre comprend une ouverture par le biais de laquelle ladite deuxième chambre est en liaison avec l'organe d'actionnement et en ce que ladite première chambre est séparée de la deuxième chambre par une membrane flexible portant un clapet d'obturation pour obturer ladite ouverture lorsque la pression de la première chambre est supérieure à la pression de la deuxième chambre. De préférence, le clapet est sollicité par un organe élastique dans le sens de l'obturation de l'ouverture par le clapet.

Selon encore un autre aspect, l'invention propose un dispositif de freinage d'un véhicule ferroviaire, comprenant le dispositif de distribution de pression mentionné précédemment dans lequel le premier distributeur est un distributeur de freinage pneumatique, le premier et le deuxième distributeurs étant alimentés par au moins un réservoir de pression pneumatique disposé sur ledit véhicule ferroviaire et alimenté en air comprimé par une conduite générale de freinage, l'organe d'actionnement étant un cylindre de frein pneumatique du véhicule ferroviaire.

Selon encore un autre aspect, l'invention propose une valve comprenant un premier, un deuxième et un troisième raccords de fluide, une première chambre reliée au premier raccord, une deuxième chambre reliée au deuxième raccord, ladite deuxième chambre présentant une ouverture de liaison vers le troisième raccord et un clapet mobile pour sélectivement obturer ladite ouverture, disposé coulissant dans un passage reliant la première chambre et la deuxième chambre, la pression dans la première chambre agissant sur ledit clapet dans le sens de l'obturation de ladite ouverture. De préférence, la valve comprend en outre un siège de clapet pour coopérer avec ledit clapet et entourant ladite ouverture, la section dudit siège de clapet étant supérieure à la section dudit passage. Il est avantageux que ledit clapet puisse coulisser dans ledit passage de façon étanche et avec un effort de frottement sensiblement constant quelle que soit la pression dans lesdites chambres, l'étanchéité et le frottement étant de préférence obtenus par un joint torique interposé entre le passage et le clapet.

D'autres buts, caractéristiques et avantages apparaîtront à la lecture de la description d'un mode de réalisation de l'invention, faite à titre non limitatif et en regard du dessin annexé dans lequel :
la figure 1 représente schématiquement un premier mode de réalisation d'un dispositif de distribution de pression de freinage pneumatique pour un véhicule ferroviaire ;
la figure 2 représente schématiquement un deuxième mode de réalisation du dispositif de distribution de pression de freinage selon l'invention pour un véhicule ferroviaire.

Les éléments identiques pour les deux modes de réalisation représentés sont affectés des mêmes caractères de référence.

Le véhicule ferroviaire équipé du dispositif de distribution de pression pneumatique selon l'invention est inclus dans un train qui est parcouru par une conduite générale de freinage 1 à air comprimé et dont la continuité est assurée d'un véhicule à l'autre par des accouplements flexibles 2. Sur le trajet de la conduite générale 1, est interposé un distributeur de pression de freinage 3, dit deuxième distributeur, représenté de façon schématique et qui comporte notamment : un clapet 4 d'alimentation d'un réservoir auxiliaire 5 à partir de la conduite générale 1 ; un équipage principal non représenté et apte à délivrer une pression de freinage par comparaison de la pression variable de la conduite générale 1 avec la pression maximale normale de cette conduite générale stockée dans un réservoir de commande non représenté ; des étranglements 6 et 7 d'alimentation et d'échappement, dit deuxième échappement, des organes de freinage 8 et 8a, dits organes d'actionnement, constituant des cylindres de freins. Le réservoir auxiliaire 5 qui constitue la source d'air comprimé pour le freinage du véhicule ferroviaire peut, dans certaines applications, être alimenté en permanence par une conduite principale la qui court le long du train comme la conduite générale 1 par l'intermédiaire d'accouplements et qui a été représentée en traits mixtes avec le clapet d'alimentation 4a du réservoir auxiliaire 5. Les clapets d'alimentation 4 et 4a sont en général suivis ou précédés d'étranglements de remplissage 9 et 9a qui empêchent l'épuisement local de la conduite générale 1 et principale la en cas de consommation importante d'air comprimé, par exemple à la suite d'une fuite sur l'un des cylindres de frein 8 ou 8a.

Le freinage de service n'est pas réalisé par l'intermédiaire du distributeur 3 mais par l'intermédiaire d'électrovalves de serrage 10 et de desserrage 11, dit premier distributeur de pression, dont les double-clapets d'alimentation-échappement 10a et 11a sont actionnés par un solénoïde 10b, 11b sous le contrôle d'un circuit électrique de télécommande de freinage ou d'un circuit informatique ou télécommandé (par exemple pour le freinage télécommandé par radio pour des trains de marchandises longs).

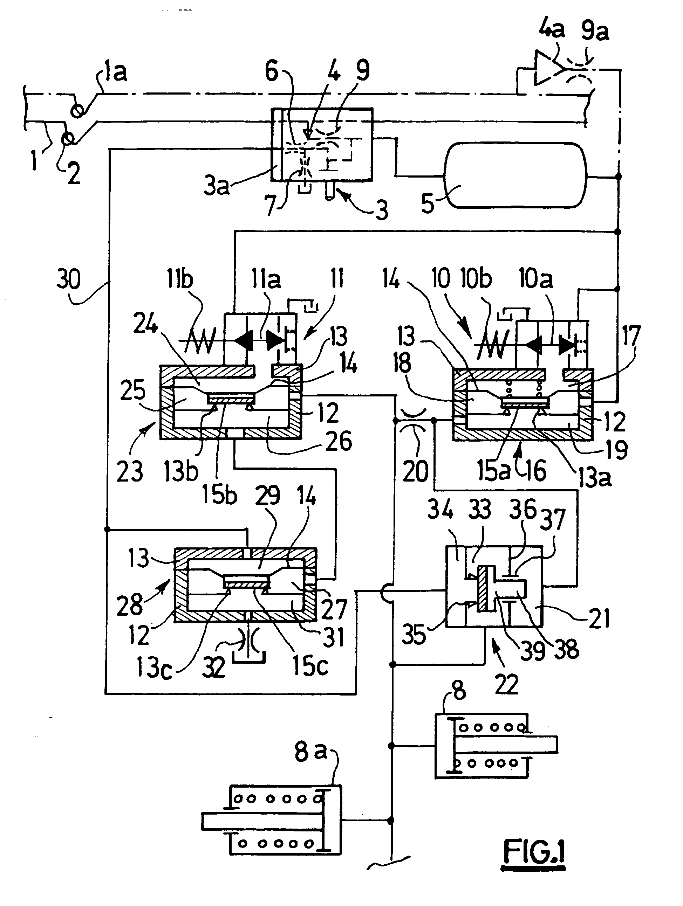

Les électrovalves de serrage et de desserrage10 et 11 sont ici couplées à des valves 16, 23 à grand débit et à grande sensibilité montées dans un boîtier comportant, dans un corps inférieur 12, un siège de clapet 13 porté par une paroi de séparation et qui est indiqué 13a, 13b, 13c pour les trois valves du même type représentées sur la figure 1. Le boîtier 12 est fermé à sa partie supérieure par un couvercle 13 qui vient serrer de façon étanche la périphérie d'une membrane flexible étanche 14 portant en son centre un clapet en élastomère qui est indiqué 15a, 15b, 15c pour les trois valves du même type représentées sur la figure 1. Les corps inférieurs 12 et les couvercles 13 délimitent, avec la paroi portant le siège de clapet et la membrane flexible 14, pour chaque valve trois chambres dont les liaisons vont être expliquées ci-après en référence à la figure 1.

Pour la valve 16 couplée à l'électrovalve de serrage 10, une chambre supérieure 17 délimitée par le couvercle 13 et la membrane 14, est reliée directement à l'électrovalve de serrage 10, un ressort à force de réaction limitée confirmant l'application du clapet 15a sur le siège 13a, en l'absence de pression dans la chambre 17. Dans la valve 16, une chambre centrale 18 est reliée à la source de pression d'air comprimé constituée par le réservoir auxiliaire 5, la pression régnant dans la chambre 18 tendant à provoquer la levée du clapet 15a de son siège 13a. Une chambre inférieure 19 de la valve 16 est reliée, via un étranglement 20 de limitation de la vitesse de montée de pression, aux cylindres de freins 8 et 8a. La chambre inférieure 19 est également reliée, en amont de l'étranglement 20, à l'une des chambres 21 d'une valve d'admission 22 qui sera décrite par la suite.

Pour la valve à grand débit 23 couplée à l'électrovalve de desserrage 11, une chambre supérieure 24 délimitée par le couvercle 13 et la membrane 14, est reliée directement à l'électrovalve de desserrage 11, tandis qu'une chambre médiane ou centrale 25 délimitée par la membrane 14 et par la paroi portant le clapet 13b est reliée aux cylindres de freins 8 et 8a en aval de l'étranglement 20. Une chambre inférieure 26 délimitée par le corps inférieur 12 et par la paroi qui porte le siège 13b, est reliée à la chambre médiane ou intermédiaire 27 d'une valve de blocage d'échappement 28.

La valve 28 de blocage d'échappement présente la même structure que les deux autres valves 16 et 23 à grande sensibilité et à grand débit. La chambre supérieure 29 délimitée par le couvercle 13 et la membrane 14, est reliée au circuit 30 d'alimentation et d'échappement des cylindres de freins à partir du distributeur de pression 3 non soumis à un contrôle informatique. La chambre inférieure 31 de la valve 28 de blocage d'échappement est reliée à l'échappement par l'intermédiaire d'un étranglement 32 de contrôle de l'échappement commandé par l'électrovalve d'échappement 11.

Le circuit 30 d'alimentation et d'échappement par le distributeur de pression de freinage 3 est relié aux cylindres de freins 8 et 8a par l'intermédiaire de la valve d'admission 22 qu'on va maintenant décrire schématiquement. La valve d'admission 22 comporte, dans un corps constitué par empilement d'éléments, trois chambres ainsi définies : la chambre 21 à droite sur la figure, une chambre intermédiaire 33 et une chambre 34 à gauche sur la figure et qui est reliée au circuit 30. La chambre 34 est délimitée par le corps de la valve 22 et par une paroi qui porte un siège de clapet 35. La chambre intermédiaire 33 est délimitée entre le corps et d'une part la paroi qui porte le siège 35 et d'autre part une paroi 36 qui porte un alésage 37 dans lequel coulisse de façon étanche ou sensiblement étanche la tige ou queue 38 d'un clapet 39 susceptible de venir s'appliquer sur le siège 35.

On va maintenant décrire le fonctionnement du dispositif de distribution de pression de sécurité dans les différentes situations qu'il est susceptible de rencontrer.

Si un freinage est déclenché par voie informatique ou télécommande radio, le double clapet 10a de l'électrovalve d'alimentation 10 est basculé par le solénoïde 10b alors excité dans la position d'échappement opposée à celle représentée sur la figure 1. La chambre 17 est alors mise à l'échappement tandis que la chambre 18 reste reliée à la source de pression (d'air comprimé) du réservoir auxiliaire 5. En conséquence, la membrane 14 est déplacée vers le haut et le clapet 15a se décolle du siège 13a en ouvrant le passage à l'air comprimé vers la chambre 19 et, via l'étranglement 20 de limitation de la vitesse de montée de pression, vers les cylindres de freins 8, 8a et autres (non représentés) qui exercent à une pression croissante une force d'application des freins sur des garnitures de friction. Le premier impact de pression en amont de l'étrangement 20 parvient dans la chambre 21 de la valve d'admission 22 et agit immédiatement sur la queue de clapet 38 pour plaquer le clapet 39 sur le siège 35 et ainsi isoler les cylindres de frein 8 et 8a du circuit 30 du distributeur 3, ce qui est encore confirmé par l'alimentation de la chambre 33 à l'aval de l'étranglement 20.

L'échappement des cylindres de frein est fermé car dans le même temps où le solénoïde 10b est excité pour inverser la position du double clapet 10a, le solénoïde 11b est également excité pour inverser la position du double clapet 11a. La chambre 24 de la valve 23 est alors reliée à la source de pression du réservoir auxiliaire 5 et la membrane 14 plaque le clapet 15b sur le siège 13b, ce qui isole de l'échappement la chambre 25 et le circuit d'alimentation des cylindres de freins 8 et 8a. On doit comprendre que le serrage des freins s'effectue habituellement par des impulsions d'excitation du solénoïde lOb qui provoquent chaque fois l'ouverture du clapet 15a et l'alimentation des cylindres de frein 8 et 8a par de l'air comprimé du réservoir auxiliaire 5. Pendant ces impulsions, le solénoïde 11b reste excité pour maintenir sous pression la chambre 24 et le clapet 15b fermé.

Si un desserrage des freins est déclenché par voie informatique ou par télécommande radio, le double clapet 10a de l'électrovalve d'admission 10 est basculé par désexcitation du solénoïde 10b dans la position d'alimentation représentée sur la figure, si ce n'était pas déjà le cas à l'achèvement des impulsions de montée de la pression de freinage. La chambre 17 est immédiatement remise sous pression et le clapet 15a est plaqué sur le siège 13a pour isoler le circuit des cylindres de freins 8 et 8a de l'alimentation en air comprimé par le réservoir auxiliaire 5.

Dans le même temps, le double clapet 11a de l'électrovalve d'échappement 11 est ramené dans la position représentée sur la-figure 1 sous l'action du solénoïde 11b à desexcité. La chambre 24 est mise à l'échappement et la pression régnant dans les cylindres de freins et transmise à la chambre 25 de la valve 23 agit alors sur la membrane 14, et décolle le clapet 15b du siège 13b, ce qui relie la chambre 27 de la valve 28 de blocage d'échappement à la pression des cylindres de freins 8 et 8a. Le distributeur 3 n'étant pas actionné, le circuit 30 est à la pression atmosphérique ainsi que la chambre 29. La pression régnant dans les cylindres de freins transmise à la chambre 27 agit sur la membrane 14 de la valve 28 de blocage d'échappement et décolle le clapet 15c du siège 13c, ce qui libère le trajet de l'échappement sur l'étranglement 32 de régulation de la baisse de pression des cylindres de freins.

Au cours d'un freinage commandé par voie informatique ou radio, les cylindres de frein sont alimentés en air comprimé depuis le réservoir auxiliaire 5 dont la pression baisse à une valeur inférieure à la pression normale de 5 bars. La réalimentation de ce réservoir auxiliaire 5 prélève de l'air comprimé dans la conduite générale 1 qui peut localement n'être que très lentement réalimentée depuis la tête du train située à distance. Pour un freinage de grande intensité, l'abaissement local de la pression de la conduite générale 1 peut être d'une rapidité et d'une importance telles qu'il déclenche le freinage depuis le distributeur 3. Lors de la commande de desserrage qui suit, réalisée par la voie informatique ou radio, la valve 16 se ferme, la valve 23 s'ouvre et la vidange ou purge des cylindres de frein 8 et 8a s'effectue par la valve 28 jusqu'à ce que la pression dans la chambre 27 devienne inférieure à la pression du circuit distributeur 30. La valve 28 se ferme alors brutalement et le clapet 39 de la valve 22 s'ouvre. La fin de la purge des cylindres de frein 8 et 8a, et donc le desserrage des freins, est ensuite piloté par la pression distributeur sur le circuit 30, cette pression distributeur étant contrôlée par l'étranglement distributeur 7 mais aussi par la remontée de la pression de la conduite générale 1 qui interdit le desserrage complet des freins aussi longtemps que la pression de la conduite générale (qui remplit le réservoir auxiliaire 5) n'est pas remontée au voisinage de la pression de régime stockée dans le réservoir de commande du distributeur 3.

Si au cours d'une phase de serrage et de desserrage des freins commandée par voie informatique ou par radio, est déclenché un freinage de plus forte intensité par le distributeur 3, un tel freinage doit être considéré comme prioritaire et plus impératif que la télécommande par les voies radio ou informatiques ou électriques. Si le circuit 30 du distributeur 3 est alimenté en pression de freinage, on voit que dès que la pression de freinage régnant dans le circuit 30 et amenée à la chambre 29, est supérieure à la pression d'échappement des cylindres de freins régnant dans la chambre 27, le clapet 15c est plaqué par le diaphragme 14 sur le siège 13c, ce qui fait cesser l'échappement des cylindres de freins. La pression du circuit 30 est ensuite transmise à la chambre 34 de la valve d'admission 22. Le clapet 39 de la valve 22 est soumis à des pressions opposées. La pression des cylindres de freins 8 et 8a amenée à la chambre 21 via l'étranglement 20 agit sur la queue de clapet 38 à l'opposé de la pression du circuit 30 qui agit sur toute la section à l'intérieur du siège 35. La section de l'alésage 37 est en général légèrement inférieure à celle de l'intérieur du siège 35, et le clapet 39 se décolle du siège 35, dès que la pression de freinage délivrée par le circuit 30 devient supérieure à la pression des cylindres de freins précédemment alimentés par le pilotage de l'électrovalve de serrage 10.

A partir de cet état, si un desserrage des freins est déclenché depuis le distributeur de pression de freinage 3, et si la pression de freinage délivrée par la voie informatique est restée inférieure à celle du distributeur 3, le circuit d'échappement télécommandé via l'étranglement 32 est fermé sous l'action de la pression de freinage du circuit distributeur 30 amenée à la chambre 29 et le clapet 39 s'ouvre. Le desserrage s'effectue via le clapet 39 ouvert et décollé du siège 35 et qui le restera grâce à la friction de la queue de clapet 38 dans l'alésage 37, jusqu'à ce que la pression distributeur du circuit 30 devienne nettement inférieure à la pression de freinage délivrée par la voie informatique ou radio. L'échappement de la pression des cylindres de freins 8 et 8a s'effectue en fait via l'échappement 7 propre au distributeur 3, en assurant une baisse de pression beaucoup plus lente limitant les chocs au desserrage entre les véhicules du train, notamment dans le cas où le freinage de l'un des véhicules du train est complètement défaillant.

Si à la suite d'une phase de contrôle du freinage depuis le distributeur 3 sous le contrôle de la pression régnant dans la conduite générale de freinage 1, le contrôle du freinage est repris par voie informatique ou radio via les électrovalves de serrage et de desserrage 10 et 11, ce contrôle ne peut être efficace que pour augmenter la pression de freinage mais pas pour faire diminuer la pression de freinage à une valeur inférieure à celle délivrée par le distributeur 3.

Ainsi, si la pression de freinage délivrée par la valve 16 sous le contrôle de l'électrovalve de serrage 10 et transmise à la chambre 21 avec un effet d'à-coup devient supérieure à la pression de freinage délivrée par le distributeur 3, le clapet 39 s'applique sur le siège 35 et isole les cylindres de freins 8 et 8a du circuit 30 du distributeur 3. Aussi longtemps que la pression de freinage régnant dans la chambre 27 est supérieure à la pression du circuit 30 régnant dans la chambre 29, l'échappement de la pression des cylindres de freins 8 et 8a peut s'effectuer via l'étranglement 32.

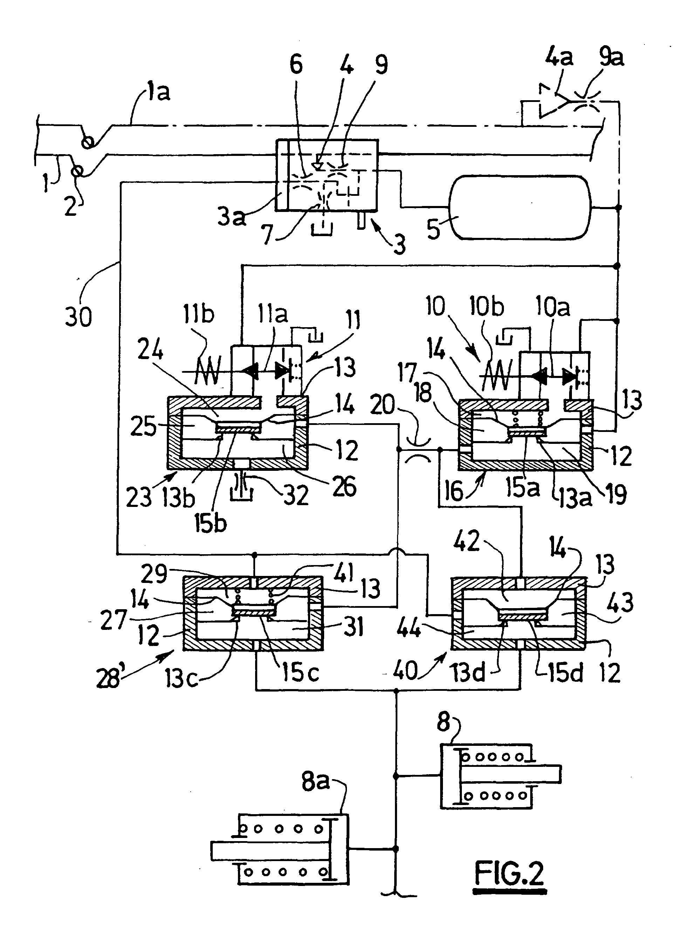

Dans le mode de réalisation représenté sur la figure 2, la valve d'admission 22 est remplacée par une valve de blocage et d'admission 40 présentant la même structure que les valves 23 et 28 représentées à la figure 1. La valve de blocage d'échappement 28 de la figure 1 est remplacée par une valve de blocage et d'admission 28' qui présente la même structure que la valve 16, c'est-à-dire que le clapet central 15c est sollicité en permanence vers la fermeture par un ressort 41 à force de réaction limitée. L'échappement de la pression des cylindres de frein 8 et 8a est toujours contrôlé en freinage télécommandé par l'électrovalve de desserrage 11 couplée à la valve 23 mais l'étranglement 32 est placé directement à la sortie de la chambre 26 de la valve 23.

La sortie de la valve de serrage 16 est reliée, à l'aval de l'étranglement 20, à la chambre 27 de la valve de blocage 28'. Le circuit 30 du distributeur 3 est relié à la chambre 29 de la valve 28' tandis que la chambre 31 de la valve 28' est reliée aux cylindres de frein 8 et 8a. On voit qu'une pression du circuit 30 du distributeur 3 qui est supérieure à la pression de commande de serrage transmise à la chambre 27 provoque l'application du clapet 15c sur le siège 13c et l'obturation du circuit de service des cylindres de frein 8 et 8a à partir des électrovalves de serrage et de desserrage 10 et 11, aussi bien à l'admission de la pression de freinage qu'à son échappement, la valve 28' fonctionnant aussi bien en valve d'admission qu'en valve de blocage de l'échappement de service 32.

La valve de blocage et d'admission 40 comporte une chambre supérieure 42 délimitée entre le couvercle 13 et la membrane 14 et qui est reliée à la sortie de la valve de serrage 16, en amont de l'étranglement 20. Une chambre médiane 43 de la valve d'admission 40, délimitée entre la membrane 14 et la paroi portant le siège 13d, est reliée au circuit 30 alimenté par le distributeur de pression de freinage 3. Une chambre 44 d'alimentation/échappement délimitée entre le corps de valve 12 et la paroi portant le siège 13d, est reliée aux cylindres de frein 8 et 8a.

On va maintenant décrire la réalisation d'un freinage de service via une télécommande radio ou informatique du dispositif de distribution de pression représenté sur la figure 2. Comme décrit précédemment, à l'excitation du solénoïde 10b, la chambre 17 est mise à l'échappement et la pression régnant dans la chambre 18 ouvre le clapet 15a. L'à-coup de pression en amont de l'étranglement 20 se transmet à la chambre 42 de la valve de blocage et d'admission 40 dont le clapet 15d se ferme alors sur le siège 13d car le distributeur 3 ne transmet pas de pression de freinage au circuit 30. Le solénoïde 11b est également excité et met la chambre 24 sous pression pour fermer le clapet d'échappement 15b sur son siège.

La pression pneumatique de freinage se transmet, à l'aval de l'étranglement 20, à la chambre 27 de la valve de blocage 28'. La chambre 29 n'étant pas soumise à une pression de freinage délivrée par le distributeur 3, la pression transmise à la chambre 27 agit sur la membrane 14 de la valve 28' et surmonte la force de réaction du ressort 41 pour ouvrir le clapet 15c et alimenter les cylindres de frein 8 et 8a à travers l'étranglement 20 en permettant une montée relativement rapide de la pression dans les cylindres de frein 8 et 8a sans générer d'efforts axiaux trop importants entre les divers véhicules du train.

Au desserrage des freins, le solénoïde 11b qui était resté excité pendant toute la durée du freinage, est désexcité, ce qui met la chambre 24 à l'échappement et provoque la levée du clapet 15b de son siège sous l'action de la pression des cylindres de frein transmise par la valve de blocage 28' alors ouverte. Lorsque la pression en cours d'échappement et régnant dans la chambre 27 n'est plus suffisante pour maintenir le clapet 15c ouvert à l'encontre de la faible sollicitation du ressort 41, la valve de blocage 28' se referme. La purge (l'échappement de l'air) des cylindres de frein 8 et 8a se poursuit alors via la valve de blocage 40 car la pression régnant dans la chambre 42 se purge via les étranglements 20 et 32 et le clapet 15d s'ouvre sous l'action de la pression résiduelle régnant dans les cylindres de frein. La purge de l'air comprimé des cylindres de frein s'achève à travers l'étranglement d'échappement 7 propre au distributeur 3. Avec le mode de réalisation représenté sur la figure 2, le desserrage final des freins en mode télécommande est retardé pour rejoindre le rythme de desserrage imposé par le distributeur 3, ce qui est favorable pour la sécurité à l'égard des risques de ruptures d'attelage et de déraillement au cours du desserrage des freins.

On va maintenant expliquer le fonctionnement d'un freinage télécommandé complexe effectué par l'intermédiaire du mode de réalisation du dispositif de distribution de pression selon la figure 2. On suppose que le véhicule ferroviaire équipé du distributeur 3 et des valves de serrage 16, de desserrage 23 et d'admission 28' et 40 est placé à grande distance de la source de réalimentation de la conduite générale 1, par exemple au centre d'un train long à locomotives actives de tête et de queue ou à la queue d'un train long à locomotive(s) de tête uniquement (et sans la conduite principale 1a).

Au cours d'un freinage télécommandé par radio et demandant la puissance de freinage maximum, c'est-à-dire après de nombreuses impulsions d'excitation du solénoïde 10b, la valve de serrage 16 et la valve de blocage et d'admission 28' sont ouvertes et alimentent les cylindres de frein 8 et 8a. Les cylindres de frein 8 et 8a sont alimentés sensiblement à leur pression maximale de régime (3,8 bars selon les règles UIC) et la pression du réservoir auxiliaire 5 peut être réduite de façon importante (par exemple à 4 bars au lieu des 5 bars de régime). La réalimentation du réservoir auxiliaire 5 (et de ceux des véhicules voisins) est certes réalisée à travers l'étranglement 9 du distributeur mais elle prélève l'air comprimé dans la conduite générale 1 qui n'est que très lentement réalimentée depuis la tête du train située à distance. L'abaissement de la pression de la conduite générale 1 est tel qu'il finit par déclencher le freinage depuis le distributeur 3 à une pression inférieure à la pression d'alimentation par l'électrovalve de serrage 10. La pression du circuit 30 du distributeur 3 étant inférieure à la pression des cylindres de frein 8 et 8a, la valve de blocage 28' reste ouverte et la valve de blocage 40 reste fermée.

Si un desserrage des freins est alors télécommandé par radio, la valve d'échappement 23 s'ouvre et l'échappement de la pression pneumatique des cylindres de frein 8 et 8a s'effectue à travers l'étranglement 32. Dès que la pression régnant dans la chambre 27 de la valve de blocage 28' devient proche de la pression de freinage distributeur au circuit 30, le ressort 41 provoque la fermeture du clapet 15c sur son siège. La pression pneumatique régnant dans la chambre 42 de la valve de blocage 40 s'échappe à travers les étranglements 20 et 32, ce qui provoque l'ouverture du clapet 15d et la liaison des cylindres de frein 8 et 8a avec le distributeur 3.

La purge de la pression des cylindres de frein 8 et 8a, pression qui correspond à l'action de la réduction de la pression de la conduite générale de freinage 1 sur l'équipage principal du distributeur 3, ne peut alors pas être évacuée sous le seul contrôle de l'étranglement de purge 7 du distributeur 3. En fait, c'est la remontée de la pression de la conduite générale 1 vers la pression de régime (en principe de 5 bars) qui va permettre le desserrage des cylindres de frein 8 et 8a à travers l'échappement de l'équipage mobile du distributeur 3 et l'étranglement 7. Le retard au desserrage du freinage télécommandé qui est provoqué dans les circonstances que l'on vient d'expliquer par le dispositif de distribution de pression de freinage selon l'invention (le mode de réalisation de la figure 1 permet d'obtenir le même effet de retard) est ici essentiel à la sécurité du freinage. En effet, si le conducteur du train devait pour des raisons de sécurité déclencher un nouveau freinage télécommandé, la pression d'air comprimé des réservoirs de commande 5 du train doit être la plus proche possible de la pression de régime de la conduite générale de freinage pour réduire les risques d'épuisabilité du frein pneumatique.

L'ensemble des électrovalves de serrage et de desserrage 10 et 11 avec leurs valves pilotées 16 et 23, ainsi que le dispositif de distribution de pression selon l'invention dans les modes de réalisation des figures 1 et 2 peut être inclus dans un corps comportant les liaisons de fluide entre valves et qui est avantageusement interposé entre le distributeur 3 et son support 3a pour assurer plus aisément les liaisons vers le réservoir auxiliaire 5 et vers les cylindres de frein.

D'autres modes de réalisation que ceux qui ont été décrits et représentés sont possibles, en conservant les schémas de branchement de la valve de blocage d'échappement 28 et de la valve d'admission 22 (et respectivement des valves de blocage 28' et 40) d'une part, des cylindres de freins 8 et 8a et du distributeur 3 d'autre part. Les électrovalves de serrage et de desserrage 10 et 11 combinées aux valves à grande sensibilité 16 et 23 peuvent être remplacées par des valves proportionnelles, c'est-à-dire délivrant une pression proportionnelle ou inversement proportionnelle à un courant électrique parcourant la valve, combinées à des valves-relais à grand débit. On doit comprendre que le distributeur de freinage 3 qui est imposé par les réglementations pour chaque véhicule ferroviaire d'un train a pour fonction d'assurer le freinage en cas de défaillance des automatismes et télécommandes qui contrôlent normalement le freinage du train. Dans un tel cas de perturbation aiguë, les vitesses de variation de la pression de freinage doivent être plus limitées qu'avec le freinage de service, car certains véhicules peuvent être complètement dépourvus de freinage, à la suite d'un choc ou d'un accident par exemple, et les chocs entre voitures au freinage et surtout au desserrage des freins, en sont aggravés.

Bien entendu, la présente invention n'est pas limitée aux modes de réalisation décrits et représentés, mais elle concerne également toutes les variantes aisément accessibles à l'homme de l'art, d'après les revendications suivantes.

## Revendications

1. Procédé de distribution de pression vers au moins un organe d'actionnement (8, 8a) à l'aide d'un premier distributeur de pression (10, 11) et d'un deuxième distributeur de pression (3) avec :
- la délivrance d'une première pression à l'organe d'actionnement (8, 8a) ou la mise à un premier circuit échappement (26 ; 32) de l'organe d'actionnement par le premier distributeur (10, 11) ;
- la délivrance d'une deuxième pression à l'organe d'actionnement (8, 8a) ou la mise à un deuxième circuit d'échappement (7) de l'organe d'actionnement (8, 8a) par le deuxième distributeur (3) ;
et comprenant une étape de blocage de la mise au premier circuit d'échappement (26 ; 32) de l'organe d'actionnement par le premier distributeur (10, 11) lorsque la deuxième pression est supérieure à la pression dans l'organe d'actionnement (8, 8a).

2. Procédé selon la revendication 1, **caractérisé en ce que** le blocage de la mise au premier circuit d'échappement (26 ; 32) est réalisé par la fermeture du premier échappement.

3. Procédé selon la revendication 1, **caractérisé en ce que** le blocage de la mise au premier circuit d'échappement (26 ; 32) est réalisé par isolation de l'organe d'actionnement du premier distributeur.

4. Procédé selon l'une quelconque des revendications 1 à 3, **caractérisé en ce qu'**il comprend une étape d'isolation de l'organe d'actionnement du deuxième distributeur lorsque la première pression est supérieure à la deuxième pression.

5. Procédé selon l'une quelconque des revendications 1 à 4, **caractérisé en ce que** l'organe d'actionnement actionne un frein de véhicule ferroviaire.

6. Dispositif de distribution de pression vers au moins un organe d'actionnement (8, 8a), comprenant :
- un premier distributeur de pression (10, 11) comprenant une chambre d'échappement (26), ledit premier distributeur de pression (10, 11) étant susceptible d'être alimenté par une source de pression (5) et de délivrer une première pression à l'organe d'actionnement ou de relier l'organe d'actionnement à un premier circuit d'échappement (26 ; 32);
- un deuxième distributeur de pression (3) susceptible d'être alimenté par une source de pression (5) et de délivrer une deuxième pression à l'organe d'actionnement ou de relier l'organe d'actionnement à un deuxième circuit d'échappement (7) ;
**caractérisé en ce qu'**il comprend en outre
- des moyens de blocage (28 ; 28') pour bloquer la liaison entre l'organe d'actionnement (8, 8a) et le premier circuit d'échappement (26 ; 32) lorsque la deuxième pression est supérieure à la pression dans l'organe d'actionnement (8, 8a).

7. Dispositif selon la revendication 6, **caractérisé en ce qu'**il comprend des moyens d'isolement (22 ; 40) isolant l'organe d'actionnement (8, 8a) du deuxième distributeur (3) lorsque la première pression est supérieure à la deuxième pression.

8. Dispositif selon la revendication 7, **caractérisé en ce que** les moyens d'isolement comprennent une valve d'admission (22) comportant une première chambre (21) reliée au premier distributeur (10, 11), une deuxième chambre (33) reliée à l'organe d'actionnement, **en ce que** ladite deuxième chambre comprend une ouverture par le biais de laquelle ladite deuxième chambre est en liaison avec le deuxième distributeur (3) et **en ce qu'**un clapet mobile (39) pour sélectivement obturer ladite ouverture, est disposé coulissant dans un passage (37) reliant la première chambre et la deuxième chambre, la pression dans la première chambre agissant sur le clapet dans le sens de l'obturation de ladite ouverture.

9. Dispositif selon la revendication 8, **caractérisé en ce que** la valve d'admission comprend un siège de clapet (35) coopérant avec le clapet et entourant l'ouverture, la section du siège de clapet (35) étant supérieure à la section du passage (37).

10. Dispositif selon la revendication 8, **caractérisé en ce que** le clapet mobile (39) coulisse dans ledit passage (37) de façon étanche et avec un effort de frottement sensiblement constant quelle que soit la pression dans lesdites chambres, l'étanchéité et le frottement étant de préférence obtenus par un joint torique interposé entre le passage et le clapet.

11. Dispositif de distribution selon la revendication 7, **caractérisé en ce que** les moyens d'isolement comprennent une valve d'admission (40) comportant une première chambre (42) reliée au premier distributeur (10, 11), une deuxième chambre (43) reliée au deuxième distributeur (3), **en ce que** ladite deuxième chambre comprend une ouverture (13d) par le biais de laquelle ladite deuxième chambre est en liaison avec l'organe d'actionnement (8, 8a) et **en ce que** ladite première chambre est séparée de la deuxième chambre par une membrane flexible (14) portant un clapet d'obturation (15d) pour obturer ladite ouverture lorsque la pression de la première chambre est supérieure à la pression de la deuxième chambre.

12. Dispositif selon l'une quelconque des revendications 8 à 11, **caractérisé en ce que** ladite première chambre est reliée au premier distributeur en amont de moyens d'étranglement (20) disposés entre le premier distributeur (10, 11) et l'organe d'actionnement (8, 8a).

13. Dispositif selon l'une quelconque des revendications 6 à 12, **caractérisé en ce que** les moyens de blocage (28) ferment le premier circuit d'échappement (26 ; 32).

14. Dispositif selon la revendication 13, **caractérisé en ce que** les moyens de blocage déterminent la pression dans l'organe d'actionnement au niveau de la chambre d'échappement (26) du premier distributeur de pression (10, 11).

15. Dispositif selon la revendication 14, **caractérisé en ce que** les moyens de blocage comprennent une valve de blocage (28) comportant une première chambre (29) reliée au deuxième distributeur (3), une deuxième chambre (27) reliée à la chambre d'échappement (26) du premier distributeur, **en ce que** ladite deuxième chambre comprend une ouverture (13c) par le biais de laquelle ladite deuxième chambre est en liaison avec un échappement (32) et **en ce que** ladite première chambre est séparée de la deuxième chambre par une membrane flexible (14) portant un clapet d'obturation (15c) pour obturer ladite ouverture (13c) lorsque la pression de la première chambre est supérieure à la pression de la deuxième chambre.

16. Dispositif selon l'une quelconque des revendications 6 à 12, **caractérisé en ce que** les moyens de blocage (28') isolent l'organe d'actionnement (8, 8a) du premier distributeur (10, 11).

17. Dispositif selon la revendication 16, **caractérisé en ce que** les moyens de blocage comprennent une valve de blocage (28') comportant une première chambre (29) reliée au deuxième distributeur (3), une deuxième chambre (27) reliée au premier distributeur (10, 11), **en ce que** ladite deuxième chambre comprend une ouverture (13c) par le biais de laquelle ladite deuxième chambre est en liaison avec l'organe d'actionnement et **en ce que** ladite première chambre est séparée de la deuxième chambre par une membrane flexible (14) portant un clapet d'obturation (15c) pour obturer ladite ouverture lorsque la pression de la première chambre est supérieure à la pression de la deuxième chambre.

18. Dispositif selon la revendication 17, **caractérisé en ce que** le clapet (15c) est sollicité par un organe élastique (41) dans le sens de l'obturation de l'ouverture par le clapet (15c).

19. Dispositif de freinage d'un véhicule ferroviaire, comprenant un dispositif selon l'une quelconque des revendications 6 à 18 dans lequel le premier distributeur (10, 11) est un distributeur de freinage pneumatique télécommandé par voie électrique, informatique ou radio, le deuxième distributeur (3) est un distributeur de freinage pneumatique télécommandé par voie pneumatique, le premier et le deuxième distributeurs étant alimentés par au moins un réservoir de pression pneumatique (5) disposé sur ledit véhicule ferroviaire et alimenté en air comprimé par une conduite générale de freinage (1), l'organe d'actionnement (8, 8a) étant un cylindre de frein pneumatique du véhicule ferroviaire.

## Claims

1. Method of distributing pressure to at least one actuator (8, 8a) using a first pressure distributor (10, 11) and a second pressure distributor (3) with:
- delivery of a first pressure to the actuator (8, 8a) or connection of the actuator to a first exhaust circuit (26; 32) by means of the first distributor (10, 11) ;
- delivery of a second pressure to the actuator (8, 8a) or connection of the actuator (8, 8a) to a second exhaust circuit (7) by means of the second distributor (3);
and comprising a step of blocking the connection of the actuator to the first exhaust circuit (26; 32) by means of the first distributor (10, 11) when the second pressure is greater than the pressure in the actuator (8, 8a).

2. Method of claim 1, **characterized in that** blocking of the connection to the first exhaust circuit (26; 32) is performed by closing the first exhaust.

3. Method of claim 1, **characterized in that** the blocking of connection to the first exhaust circuit (26 ; 32) is performed by isolating the actuator from the first distributor.

4. Method according to any one of claims 1 to 3, **characterized in that** it comprises a step of isolating the actuator from the second distributor when the first pressure is greater than the second pressure.

5. Method according to any one of claims 1 to 4, **characterized in that** the actuator actuates a brake of a rail vehicle.

6. Device for distributing pressure to at least one actuator (8, 8a), comprising:
- a first pressure distributor (10, 11) comprising an exhaust chamber (26), said first pressure distributor (10, 11) being capable of being supplied by a pressure source (5) and delivering a first pressure to the actuator or of connecting the actuator to a first exhaust circuit (26 ; 32);
- a second pressure distributor (3) capable of being supplied by a pressure source (5) and of delivering a second pressure to the actuator or of connecting the actuator to a second exhaust circuit (7);
**characterized in that** it further comprises
- blocking means (28, 28 ') for blocking the connection between the actuator (8, 8a) and the first exhaust circuit (26 ; 32) when the second pressure is greater than the pressure in the actuator (8, 8a).

7. Device according to claim 6, **characterized in that** it comprises isolation means (22, 40) isolating the actuator (8, 8a) from the second distributor (3) when the first pressure is greater than the second pressure.

8. Device according to claim 7, **characterized in that** the isolating means include an inlet valve (22) having a first chamber (21) connected to the first distributor (10, 11), a second chamber (33) connected to the actuator, **in that** said second chamber includes an opening by means of which said second chamber is connected to the second distributor (3) and **in that** a movable valve (39) for selectively closing said opening, is slidably arranged in a passage (37) connecting the first chamber and the second chamber, the pressure in the first chamber acting on the valve in the direction of closing of said opening.

9. Device according to claim 8, **characterized in that** the inlet valve comprises a valve seat (35) cooperating with the valve and surrounding the opening, the section of the valve seat (35) being greater than the section of the passage (37).

10. Device according to claim 8, **characterized in that** the movable valve (39) slides in said passage (37) in a sealed manner and with a frictional force that is substantially constant regardless of the pressure in said chambers, sealing and friction being preferably obtained by an O-ring interposed between the passage and the valve.

11. Device of distribution according to claim 7, **characterized in that** the isolating means include an inlet valve (40) having a first chamber (42) connected to the first distributor (10, 11), a second chamber (43) connected to the second distributor (3), **in that** said second chamber includes an opening (13d) through which said second chamber is connected to the actuator (8, 8a) and **in that** said first chamber is separated from the second chamber by a flexible membrane (14) carrying a closure valve (15d) for closing said opening when the pressure in the first chamber is greater than the pressure in the second chamber.

12. Device according to any one of claims 8 to 11, **characterized in that** said first chamber is connected to the first distributor upstream of throttling means (20) disposed between the first distributor (10, 11) and the actuator (8, 8a).

13. Device according to any one of claims 6 to 12, **characterized in that** the blocking means (28) close the first exhaust circuit (26 ; 32).

14. Device according to claim 13, **characterized in that** the blocking means determine the pressure in the actuator at the exhaust chamber (26) of the first pressure distributor (10, 11).

15. Device according to claim 14, **characterized in that** the blocking means comprise a shut-off valve (28) having a first chamber (29) connected to the second distributor (3), a second chamber (27) connected to the exhaust chamber (26) of the first distributor, **in that** said second chamber includes an opening (13c) through which said second chamber is connected to a exhaust (32) and **in that** said first chamber is separated from the second chamber by a flexible membrane (14) carrying a closure valve (15c) to close off said opening (13c) when the pressure in the first chamber is greater than the pressure in the second chamber.

16. Device according to any one of claims 6 to 12, **characterized in that** the blocking means (28 ') isolate the actuator (8, 8a) from the first distributor (10, 11).

17. Device according to claim 16, **characterized in that** the blocking means comprise a shut-off valve (28 ') having a first chamber (29) connected to the second distributor (3), a second chamber (27) connected to the first distributor (10, 11), **in that** said second chamber includes an opening (13c) through which said second chamber is connected to the actuator and **in that** said first chamber is separated from the second chamber by a flexible membrane (14) carrying a closure valve (15c) for closing said opening when the pressure in the first chamber is greater than the pressure in the second chamber.

18. Device according to claim 17, **characterized in that** the valve (15c) is biased by an elastic member (41) in the direction of closing off of the opening by the valve (15c).

19. Device for a rail vehicle braking apparatus, comprising a device according to any one of claims 6 to 18 wherein the first distributor (10, 11) is an electrically-, computer- or radio-remote controlled air braking distributor, the second distributor (3) is an air braking distributor remotely controlled by pneumatic means, the first and second distributors being supplied by at least one air pressure tank (5) arranged on said rail vehicle and supplied with compressed air by a general brake pipe (1), the actuator (8, 8a) being a pneumatic brake cylinder of the rail vehicle.

## Patentansprüche

1. Verfahren zur Druckverteilung auf mindestens ein Betätigungsorgan (8, 8a) mit Hilfe eines ersten Druckverteilers (10, 11) und eines zweiten Druckverteilers (3) mit:
- der Zuführung eines ersten Druckes zu dem Betätigungsorgan (8, 8a) oder dem Verbinden des Betätigungsorgans mit einem ersten Auslasskreis (26; 32) durch den ersten Verteiler (10, 11);
- der Zuführung eines zweiten Druckes zu dem Betätigungsorgan (8, 8a) oder dem Verbinden des Betätigungsorgans (8, 8a) mit einem zweiten Auslasskreis (7) durch den zweiten Verteiler (3);
und welches einen Schritt des Sperrens des Verbindens des Betätigungsorgans mit dem ersten Auslasskreis (26; 32) durch den ersten Verteiler (10, 11), wenn der zweite Druck höher als der Druck in dem Betätigungsorgan (8, 8a) ist, umfasst.

2. Verfahren nach Anspruch 1, **dadurch gekennzeichnet, dass** das Sperren des Verbindens mit dem ersten Auslasskreis (26; 32) durch das Schließen des ersten Auslasses erfolgt.

3. Verfahren nach Anspruch 1, **dadurch gekennzeichnet, dass** das Sperren des Verbindens mit dem ersten Auslasskreis (26; 32) durch Trennung des Betätigungsorgans von dem ersten Verteiler erfolgt.

4. Verfahren nach einem der Ansprüche 1 bis 3, **dadurch gekennzeichnet, dass** es einen Schritt der Trennung des Betätigungsorgans von dem zweiten Verteiler, wenn der erste Druck höher als der zweite Druck ist, umfasst.

5. Verfahren nach einem der Ansprüche 1 bis 4, **dadurch gekennzeichnet, dass** das Betätigungsorgan eine Schienenfahrzeugbremse betätigt.

6. Vorrichtung zur Druckverteilung auf mindestens ein Betätigungsorgan (8, 8a), welche umfasst:
- einen ersten Druckverteiler (10, 11), der eine Auslasskammer (26) umfasst, wobei der erste Druckverteiler (10, 11) von einer Druckquelle (5) gespeist werden kann und dem Betätigungsorgan einen ersten Druck zuführen oder das Betätigungsorgan mit einem ersten Auslasskreis (26; 32) verbinden kann;
- einen zweiten Druckverteiler (3), der von einer Druckquelle (5) gespeist werden kann und dem Betätigungsorgan einen zweiten Druck zuführen oder das Betätigungsorgan mit einem zweiten Auslasskreis (7) verbinden kann;
**dadurch gekennzeichnet, dass** sie außerdem umfasst
- Sperrmittel (28; 28') zum Sperren der Verbindung zwischen dem Betätigungsorgan (8, 8a) und dem ersten Auslasskreis (26; 32), wenn der zweite Druck höher als der Druck in dem Betätigungsorgan (8, 8a) ist.

7. Vorrichtung nach Anspruch 6, **dadurch gekennzeichnet, dass** sie Trennmittel (22; 40) umfasst, die das Betätigungsorgan (8, 8a) von dem zweiten Verteiler (3) trennen, wenn der erste Druck höher als der zweite Druck ist.

8. Vorrichtung nach Anspruch 7, **dadurch gekennzeichnet, dass** die Trennmittel ein Einlassventil (22) umfassen, das eine erste Kammer (21), die mit dem ersten Verteiler (10, 11) verbunden ist, und eine zweite Kammer (33), die mit dem Betätigungsorgan verbunden ist, aufweist, **dadurch**, dass die zweite Kammer eine Öffnung umfasst, über welche die zweite Kammer mit dem zweiten Verteiler (3) in Verbindung steht, und **dadurch**, dass eine bewegliche Klappe (39) zum selektiven Verschließen der Öffnung gleitend in einem Durchgang (37) angeordnet ist, der die erste Kammer und die zweite Kammer verbindet, wobei der Druck in der ersten Kammer auf die Klappe in der Richtung des Verschließens der Öffnung einwirkt.

9. Vorrichtung nach Anspruch 8, **dadurch gekennzeichnet, dass** das Einlassventil einen Ventilsitz (35) umfasst, der mit der Klappe zusammenwirkt und die Öffnung umgibt, wobei der Querschnitt des Ventilsitzes (35) größer als der Querschnitt des Durchgangs (37) ist.

10. Vorrichtung nach Anspruch 8, **dadurch gekennzeichnet, dass** die bewegliche Klappe (39) in dem Durchgang (37) dicht und mit einer im Wesentlichen konstanten Reibungskraft gleitet, gleichgültig, welcher Druck in den Kammern vorhanden ist, wobei die Dichtigkeit und die Reibung vorzugsweise durch einen O-Ring erzielt werden, der zwischen dem Durchgang und der Klappe angeordnet ist.

11. Verteilungsvorrichtung nach Anspruch 7, **dadurch gekennzeichnet, dass** die Trennmittel ein Einlassventil (40) umfassen, das eine erste Kammer (42), die mit dem ersten Verteiler (10, 11) verbunden ist, und eine zweite Kammer (43), die mit dem zweiten Verteiler (3) verbunden ist, aufweist, **dadurch**, dass die zweite Kammer eine Öffnung (13d) umfasst, über welche die zweite Kammer mit dem Betätigungsorgan (8, 8a) in Verbindung steht, und **dadurch**, dass die erste Kammer von der zweiten Kammer durch eine flexible Membran (14) getrennt ist, die eine Absperrklappe (15d) trägt, um die Öffnung zu verschließen, wenn der Druck der ersten Kammer höher als der Druck der zweiten Kammer ist.

12. Vorrichtung nach einem der Ansprüche 8 bis 11, **dadurch gekennzeichnet, dass** die erste Kammer mit dem ersten Verteiler stromaufwärts von Drosselmitteln (20) verbunden ist, die wischen dem ersten Verteiler (10, 11) und dem Betätigungsorgan (8, 8a) angeordnet sind.

13. Vorrichtung nach einem der Ansprüche 6 bis 12, **dadurch gekennzeichnet, dass** die Sperrmittel (28) den ersten Auslasskreis (26; 32) schließen.

14. Vorrichtung nach Anspruch 13, **dadurch gekennzeichnet, dass** die Sperrmittel den Druck in dem Betätigungsorgan an der Auslasskammer (26) des ersten Druckverteilers (10, 11) bestimmen.

15. Vorrichtung nach Anspruch 14, **dadurch gekennzeichnet, dass** die Sperrmittel ein Sperrventil (28) umfassen, das eine erste Kammer (29), die mit dem zweiten Verteiler (3) verbunden ist, und eine zweite Kammer (27), die mit der Auslasskammer (26) des ersten Verteilers verbunden ist, aufweist, **dadurch**, dass die zweite Kammer eine Öffnung (13c) umfasst, über welche die zweite Kammer mit einem Auslass (32) in Verbindung steht, und **dadurch**, dass die erste Kammer von der zweiten Kammer durch eine flexible Membran (14) getrennt ist, die eine Absperrklappe (15c) trägt, um die Öffnung (13c) zu verschließen, wenn der Druck der ersten Kammer höher als der Druck der zweiten Kammer ist.

16. Vorrichtung nach einem der Ansprüche 6 bis 12, **dadurch gekennzeichnet, dass** die Sperrmittel (28') das Betätigungsorgan (8, 8a) von dem ersten Verteiler (10, 11) trennen.

17. Vorrichtung nach Anspruch 16, **dadurch gekennzeichnet, dass** die Sperrmittel ein Sperrventil (28') umfassen, das eine erste Kammer (29), die mit dem zweiten Verteiler (3) verbunden ist, und eine zweite Kammer (27), die mit dem ersten Verteiler (10, 11) verbunden ist, aufweist, **dadurch**, dass die zweite Kammer eine Öffnung (13c) umfasst, über welche die zweite Kammer mit dem Betätigungsorgan in Verbindung steht, und **dadurch**, dass die erste Kammer von der zweiten Kammer durch eine flexible Membran (14) getrennt ist, die eine Absperrklappe (15c) trägt, um die Öffnung zu verschließen, wenn der Druck der ersten Kammer höher als der Druck der zweiten Kammer ist.

18. Vorrichtung nach Anspruch 17, **dadurch gekennzeichnet, dass** die Klappe (15c) durch ein elastisches Organ (41) in der Richtung des Verschlusses der Öffnung durch die Klappe (15c) beaufschlagt wird.

19. Bremsvorrichtung eines Schienenfahrzeugs, welche eine Vorrichtung nach einem der Ansprüche 6 bis 18 umfasst, wobei der erste Verteiler (10, 11) ein Druckluftbremsverteiler ist, der elektrisch, computergestützt oder per Funk ferngesteuert wird, der zweite Verteiler (3) ein Druckluftbremsverteiler ist, der pneumatisch ferngesteuert wird, der erste und der zweite Verteiler durch mindestens einen pneumatischen Druckbehälter (5) gespeist werden, der in dem Schienenfahrzeug angeordnet ist und durch eine Hauptbremsleitung (1) mit Druckluft versorgt wird, und das Betätigungsorgan (8, 8a) ein Druckluftbremszylinder des Schienenfahrzeugs ist.
